# FASCICULE DE BREVET EUROPEEN

(11) **EP 2 669 171 B1**
(45) Date de publication et mention de la délivrance du brevet: **05.11.2014**
(21) Numéro de dépôt: 13168815.2
(22) Date de dépôt: 22.05.2013
(51) Int. Cl.: B63B 1/08, B63H 5/16

(54) **Navire pourvu d'au moins une ligne d'arbres équipée d'un propulseur à pompe-hélice**
Schiff mit zumindest einer Propellerwelle mit einer Schraubenpumpe
Vessel provided with at least one propeller shaft with a propeller screw pump

(30) Priorité: 01.06.2012 FR 1255083
(43) Date de publication de la demande: 04.12.2013
(73) Titulaire: STX FRANCE S.A., 44600 Saint Nazaire (FR)
(72) Inventeur: Cordier, Stéphane, 22980 Plelan Le Petit (FR)
(74) Mandataire: Regimbeau

(56) Documents cités:
- WO-A1-2012/052155
- US-A- 2 030 375
- US-A- 2 784 691

## Description

La présente invention est relative à un navire, notamment à passagers, qui est pourvu d'au moins d'une ligne d'arbres équipée d'un propulseur consistant d'une hélice sous-tuyère dotée d'un stator, l'ensemble étant appelé par la suite « pompe-hélice » et décrit plus précisément par la suite.

Le type de navire est connu du document WO 2012/052155 qui est considéré comme l'état de la technique le plus proche de l'objet de la revendication 1.

L'utilisation d'une pompe-hélice comme propulseur dans une installation de propulsion d'un navire présente des avantages multiples.

En effet, l'installation est mécaniquement simple par rapport à d'autres systèmes de propulsion utilisés, notamment pour les paquebots, tels que les "pods", et permet de fournir une poussée avec un rendement élevé, avec un minimum de nuisances acoustiques et vibratoires.

Une pompe-hélice comprend généralement un stator (constitués de plusieurs ailerons orienteurs de flux), un rotor (en l'occurrence une hélice) et une tuyère entourant l'ensemble.

Les formes de la tuyère, des aubes du rotor et du stator sont dessinées de manière connue pour obtenir le meilleur rendement, afin d'atteindre une vitesse donnée avec la puissance mécanique la plus faible possible.

La pompe-hélice est reliée au navire par l'intermédiaire d'une ligne d'arbres qui entraîne le rotor en rotation. Cet entraînement peut être réalisé par tout type de procédé connu (par renvoi d'angle, moteur électrique émergé, etc.).

En fonctionnement, le stator, généralement situé en amont du rotor, communique au flux une composante rotationnelle autour de l'axe de la tuyère dans un sens de rotation opposé au sens de rotation du rotor. La génération de cette rotation crée par réaction, un couple hydrodynamique sur le stator.

Cette disposition vise à compenser l'effet rotationnel induit par le rotor sur le fluide et à améliorer le rendement de l'installation. Dans une conception optimisée, le couple sur le stator est égal et opposé au couple sur le rotor ce qui a pour résultat d'annuler la quantité de mouvement angulaire dans le sillage de l'ensemble du propulseur.

Par ailleurs, des critères d'éloignement du propulseur par rapport à la carène du navire sont utilisés afin de réduire les interactions entre la carène et la coque.

La présente invention a pour but d'améliorer encore le rendement propulsif d'une pompe-hélice équipant un navire ; elle a plus particulièrement pour objet de proposer une forme hydrodynamique de carène permettant d'optimiser le rendement propulsif global d'un navire propulsé par une ou plusieurs pompe-hélices.

Ainsi, la présente invention propose un navire, notamment à passagers, qui est pourvu d'au moins une ligne d'arbres équipée d'un propulseur consistant en une pompe-hélice comprenant un rotor, un ou plusieurs stators ainsi qu'une tuyère, caractérisé par le fait que sa coque présente, sensiblement en regard de ladite pompe-hélice, une forme concave et que la courbe délimitant cette forme concave, selon un plan de coupe longitudinal et vertical passant par le centre de rotation du rotor, présente deux points d'inflexion, l'un situé en amont et l'autre en aval de ladite pompe-hélice, ainsi qu'une tangente parallèle à l'axe de la ligne d'arbres, tangente située en amont de ladite pompe-hélice.

Selon d'autres caractéristiques avantageuses et non limitatives de ce navire :
- ladite tangente en amont de ladite pompe-hélice est située, à une distance axiale L du bord d'attaque de la tuyère, cette distance étant inférieure à D/4, D étant le diamètre dudit rotor ;
- ladite coque est distante de ladite tuyère d'un intervalle constant, selon une direction perpendiculaire à l'axe de ladite ligne d'arbres ;
- le plan médian longitudinal du navire constitue un plan de symétrie de ladite coque, ce plan passant par le plan mince du navire ;
- la surface dudit plan mince présente, dans un plan horizontal, et/ou dans des plans intermédiaires situés entre le plan vertical et ledit plan horizontal et passant par l'axe de la ligne d'arbres, sensiblement en regard de la pompe-hélice, une forme concave et que la courbe délimitant cette forme concave, selon ce plan horizontal et/ou intermédiaire passant par l'axe de rotation du rotor, présente deux points d'inflexion, l'un situé en amont et l'autre en aval de ladite pompe-hélice, ainsi qu'une tangente parallèle à l'axe de la ligne d'arbres, tangente située en amont de ladite pompe-hélice.
- la distance H1 entre l'axe de la ligne d'arbres et ladite coque, mesurée perpendiculairement à l'axe de la ligne d'arbres et à ladite distance L dudit bord d'attaque de la tuyère est supérieure à la distance H2 entre l'axe de la ligne d'arbres et ladite coque, mesurée perpendiculairement à l'axe de la ligne d'arbres et juste en aval de la tuyère ;
- dans un plan de coupe transversal et vertical à ladite tuyère, ladite coque est distante de ladite tuyère dudit intervalle constant, sur un secteur angulaire d'au moins 45°.

D'autres caractéristiques et avantages de la présente invention apparaîtront à la lecture détaillée de la description qui va suivre.

Cette description sera faite en référence aux dessins annexés dans lesquels :
- la figure 1 est une vue en coupe longitudinale de la carène d'un navire avec une installation de propulsion à pompe-hélice, ce plan de coupe I-I passant par l'axe de rotation de l'hélice de la pompe ;
- la figure 2 est une vue selon le plan II-II de la figure 1, montrant plus particulièrement la structure de la pompe-hélice.
- enfin, la figure 3 est une vue schématique en coupe transversale d'une carène pourvue de deux pompes-hélices.

Le navire 1 représenté très partiellement aux figures annexées comporte une coque ou carène référencée 2.

Il comporte un plan mince PM situé dans le plan de symétrie du navire, intégré à la partie arrière de la carène.

De part et d'autre de ce plan mince, parallèlement à l'axe longitudinal du navire s'étend une ligne d'arbres 3 qui peut être rattachée à la coque par un ou plusieurs bras 30 et à l'extrémité de laquelle est monté le rotor de la pompe-hélice 4 (bien entendu, du fait de la coupe présentée ici, seule une ligne 3 est visible. Toutefois, ce qui est dit ci-après vaut pour chacune d'entre elles)

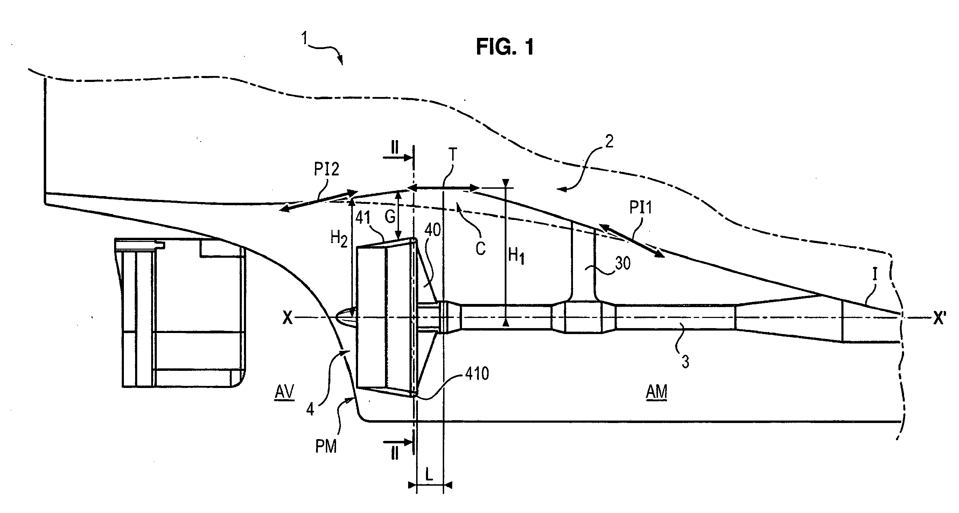

On note, notamment sur la figure 1, que cette pompe-hélice est placée légèrement en amont du bord de fuite du plan mince PM.

Sur les figures, AM correspond à amont, tandis qu'AV correspond à aval, ce qui traduit le sens de cheminement du fluide à travers l'installation.

En référence à la pompe-hélice 4, on a désigné 40 ses stators, 42 son hélice ou rotor, et 41 sa tuyère.

On notera que cette dernière est conformée de manière à être convergente d'amont en aval.

Selon l'invention, la coque 2 présente, sensiblement en regard de la pompe-hélice 4, une forme concave C et la courbe I qui délimite cette forme concave, selon le plan de coupe longitudinal I-I vertical qui passe par l'axe de rotation du rotor 42 de la pompe-hélice, présente deux points d'inflexion référencés respectivement PI1 et PI2, l'un PI1 étant situé en amont de la pompe-hélice 4, tandis que l'autre PI2 est situé en aval.

Cette ligne I possède également une tangente T qui est parallèle à l'axe X-X' de ligne d'arbres 3, cette tangente étant située en amont de la pompe

Préférentiellement, elle se situe à une distance axiale L du bord d'attaque 410 de la tuyère 41, cette distance L étant inférieure à D/4, D étant le diamètre du rotor.

Grâce à cette combinaison de caractéristiques, le système de propulsion constitué par la pompe-hélice est disposé partiellement dans la concavité C, de sorte qu'il bénéficie de l'effet combiné du ralentissement visqueux lié à la proximité de la plus grande surface de bordé possible, ainsi que du ralentissement du fluide dans cette cavité. La pompe-hélice est ainsi alimentée par un écoulement ralenti, ce qui améliore le rendement propulsif.

Par ailleurs, et comme indiqué plus haut, selon une caractéristique avantageuse de l'invention, la coque 2 est distante de la tuyère 41 d'un intervalle constant G selon une direction perpendiculaire à l'axe X-X' de la ligne d'arbres 3.

Cette disposition permet d'une part d'éviter de créer des sections divergentes et notamment des décollements de l'écoulement dans ce canal, et d'autre part, de rendre le flux extérieur au propulseur parallèle à l'axe du propulseur, de manière à ne pas créer une traînée additionnelle sur la carène lorsque le propulseur est en fonctionnement.

On limite ainsi l'effet de succion.

Les meilleurs résultats sont obtenus quand la distance H1 entre l'axe X-X' de la ligne d'arbres 3 et la coque 2, mesurée perpendiculairement à cet axe X-X' de la ligne d'arbres et à la distance L du bord d'attaque 410 de la tuyère 41, est supérieure à la distance H2 entre l'axe X-X' de la ligne d'arbres 3 et la coque 2, mesurée perpendiculairement à l'axe de la ligne d'arbres 3 et juste en aval 1 de la tuyère 41.

Dans une forme de réalisation encore préférée, dans le plan de coupe transversal et vertical II-II à ladite tuyère 31, la coque 2 est distante de la tuyère 31 d'un intervalle constant G sur un secteur angulaire d'au moins 45°.

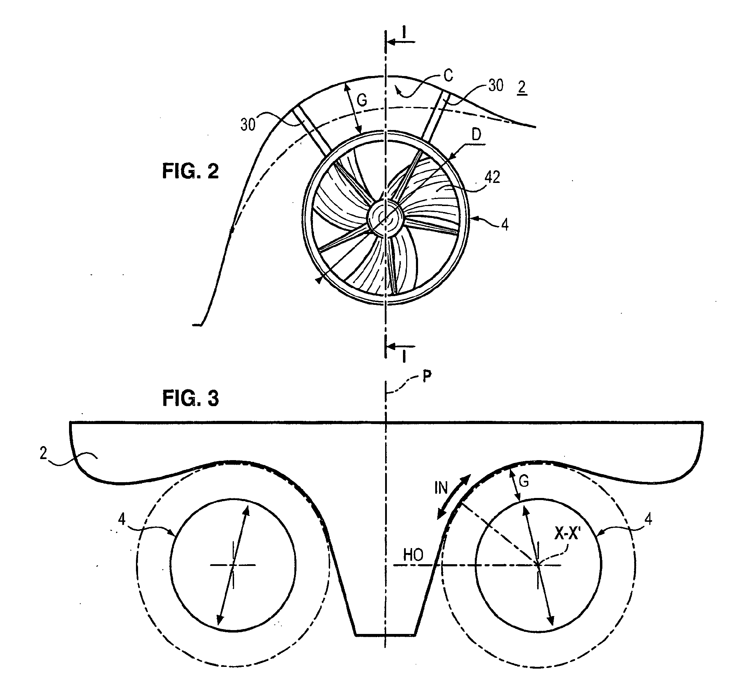

Bien entendu, dans cette configuration dans laquelle le navire présente deux lignes d'arbres équipées d'une pompe-hélice (comme cela est particulièrement visible à la figure 3) le plan longitudinal et vertical P qui passe par le plan mince PM du navire et qui constitue un plan de symétrie de la carène, constitue alors également un plan de symétrie pour lesdites pompes-hélices.

La surface du plan mince PM peut être conçue pour reproduire dans le plan horizontal HO, ou dans un plan intermédiaire IN, s'étendant entre le plan horizontal HO et le plan vertical, des caractéristiques géométriques de la carène identiques à celle décrites plus haut dans le plan vertical.

En d'autres termes, dans ces directions, la coque présente également une forme concave, avec une courbe I présentant deux points d'inflexion et une tangente tels que décrits plus haut.

## Revendications

1. Navire, notamment à passagers, qui est pourvu d'au moins une ligne d'arbres (3) équipée d'un propulseur consistant en une pompe-hélice (4) comprenant un rotor (42), un ou plusieurs stators (40) ainsi qu'une tuyère (41), **caractérisé par le fait que** sa coque (2) présente, sensiblement en regard de ladite pompe-hélice (4), une forme concave (C) et que la courbe (I) délimitant cette forme concave, selon un plan de coupe longitudinal et vertical (I-I) passant par l'axe de rotation du rotor (42), présente deux points d'inflexion (PI1, PI2), l'un (PI1) situé en amont et l'autre (PI2) en aval de ladite pompe-hélice (4), ainsi qu'une tangente (T) parallèle à l'axe (X-X') de la ligne d'arbres (3), tangente située en amont de ladite pompe-hélice (4).

2. Navire selon la revendication 1, **caractérisé par le fait que** ladite tangente en amont de ladite pompe-hélice (4) est située à une distance axiale (L) du bord d'attaque (410) de la tuyère (4), cette distance étant inférieure à D/4, D étant le diamètre dudit rotor (42).

3. Navire selon la revendication 1 ou 2, **caractérisé par le fait que** ladite coque (2) est distante de ladite tuyère (41) d'un intervalle constant (G), selon une direction perpendiculaire à l'axe (X-X') de ladite ligne d'arbres (3).

4. Navire selon l'une des revendications 1 à 3, qui comprend deux lignes d'arbres parallèles (3), **caractérisé par le fait que** le plan médian longitudinal (P) de ladite coque (2) constitue un plan de symétrie pour lesdites pompes-hélices (4), ce plan passant par le plan mince (PM) du navire.

5. Navire selon la revendication 4, **caractérisé par le fait que** la surface dudit plan mince (PM) présente, dans un plan horizontal (HO), et/ou dans des plans intermédiaires (IN) situés entre le plan vertical (I, I) et ledit plan horizontal (HO) et passant par l'axe (X-X') de la ligne d'arbres, sensiblement en regard de la pompe-hélice (4), une forme concave (C) et que la courbe (I) délimitant cette forme concave, selon ce plan horizontal (HO) et/ou intermédiaire (IN) passant par l'axe de rotation du rotor (42), présente deux points d'inflexion (PI1, PI2), l'un (PI1) situé en amont et l'autre (PI2) en aval de ladite pompe-hélice (4), ainsi qu'une tangente (T) parallèle à l'axe (X-X') de la ligne d'arbres (3), tangente située en amont de ladite pompe-hélice (4).

6. Navire selon l'une des revendications 1 à 4, **caractérisé par le fait que** la distance (H1) entre l'axe (X-X') de la ligne d'arbres (3) et ladite coque (2), mesurée perpendiculairement à l'axe (X-X') de la ligne d'arbres (3) et à ladite distance (L) dudit bord d'attaque (410) de la tuyère (41) est supérieure à la distance (H2) entre l'axe (X-X') de la ligne d'arbres (3) et ladite coque (2), mesurée perpendiculairement à l'axe (X-X') de la ligne d'arbres (3) et au bord de fuite de la tuyère (41).

7. Navire selon l'une des revendications 3 à 6, **caractérisé par le fait que**, dans un plan de coupe (II-II) transversal et vertical à ladite tuyère (31), ladite coque (2) est distante de ladite tuyère (31) dudit intervalle constant (G), sur un secteur angulaire d'au moins 45°.

## Patentansprüche

1. Wasserfahrzeug, insbesondere für Passagiere, bei dem mindestens ein Wellenstrang (3) vorgesehen ist, der mit einem Antrieb ausgestattet ist, der von einer Propellerpumpe (4) gebildet ist, die einen Rotor (42), einen oder mehrere Statoren (40) sowie eine Düse (41) umfasst, **dadurch gekennzeichnet, dass** sein Rumpf (2), im Wesentlichen der Propellerpumpe (4) gegenüber, eine konkave Form (C) aufweist, und dass die Kurve (I), die diese konkave Form begrenzt, in einer Längs- und Vertikalschnittebene (I-I), die durch die Rotationsachse des Rotors (42) verläuft, zwei Inflexionspunkte (PI1, PI2) aufweist, wobei sich der eine (PI1) stromaufwärts und der andere (PI2) stromabwärts der Propellerpumpe (4) befindet, sowie eine Tangente (T), die zu der Achse (X-X') des Wellenstrangs (3) parallel ist, wobei sich die Tangente stromaufwärts der Propellerpumpe (4) befindet.

2. Wasserfahrzeug nach Anspruch 1, **dadurch gekennzeichnet, dass** die Tangente stromaufwärts der Propellerpumpe (4) in einem axialen Abstand (L) von der Vorderkante (410) der Düse (4) befindlich ist, wobei dieser Abstand kleiner als D/4 ist, wobei D der Durchmesser des Rotors (42) ist.

3. Wasserfahrzeug nach Anspruch 1 oder 2, **dadurch gekennzeichnet, dass** der Rumpf (2) von der Düse (41) um ein Intervall (G) beabstandet ist, das in einer zu der Achse (X-X') des Wellenstrangs (3) lotrechten Richtung konstant ist.

4. Wasserfahrzeug nach einem der Ansprüche 1 bis 3, das zwei parallele Wellenstränge (3) umfasst, **dadurch gekennzeichnet, dass** die Längsmittelebene (P) des Rumpfes (3) für die Propellerpumpen (4) eine Symmetrieachse bildet, wobei diese Ebene durch die dünne Ebene (PM) des Wasserfahrzeugs verläuft.

5. Wasserfahrzeug nach Anspruch 4, **dadurch gekennzeichnet, dass** die Fläche der dünnen Ebene (PM), in einer horizontalen Ebene (HO), und/oder in Zwischenebenen (IN), die zwischen der vertikalen Ebene (I, I) und der horizontalen Ebene (HO) liegen und durch die Achse (X-X') des Wellenstrangs verlaufen, im Wesentlichen der Propellerpumpe (4) gegenüber, eine konkave Form (C) aufweist und dass die Kurve (I), die diese konkave Form begrenzt, in dieser horizontalen Ebene (HO) und/oder Zwischenebene (IN), die durch die Rotationsachse des Rotors (42) verläuft, zwei Inflexionspunkte (PI1, PI2) aufweist, wobei sich der eine (PI1) stromaufwärts und der andere (PI2) stromabwärts der Propellerpumpe (4) befindet, sowie eine Tangente (T), die zu der Achse (X-X') des Wellenstrangs (3) parallel ist, wobei sich die Tangente stromaufwärts der Propellerpumpe (4) befindet.

6. Wasserfahrzeug nach einem der Ansprüche 1 bis 4, **dadurch gekennzeichnet, dass** der Abstand (H1) zwischen der Achse (X-X') des Wellenstrangs (3) und dem Rumpf (2), senkrecht zu der Achse (X-X') des Wellenstrangs (3) und zu dem Abstand (L) von der Vorderkante (410) der Düse (41) gemessen, größer ist als der Abstand (H2) zwischen der Achse (X-X') des Wellenstrangs (3) und dem Rumpf (2), senkrecht zu der Achse (X-X') des Wellenstrangs (3) und zu der Hinterkante (410) der Düse (41) gemessen.

7. Wasserfahrzeug nach einem der Ansprüche 3 bis 6, **dadurch gekennzeichnet, dass** in einer zu der Düse (31) quergerichteten und vertikalen Schnittebene (II-II) der Rumpf (2) von der Düse (31) um das Intervall (G) beabstandet ist, das über einen Winkelsektor von mindestens 45° konstant ist.

## Claims

1. A ship, especially a passenger ship, which is provided with at least one shaft line (3) equipped with a propeller consisting of a helical pump (4) comprising a rotor (42), one or more stators (40) and a nozzle (41), **characterised in that** its hull (2) has, substantially opposite said helical pump (4), a concave form (C) and the curve (I) delimiting this concave form, according to a cut plane longitudinal and vertical (I-I) passing through the axis of rotation of the rotor (42), has two points of inflexion (PI1, PI2), one (PI1) located upstream and the other (PI2) downstream of said helical pump (4), and a tangent (T) parallel to the axis (X-X') of the shaft line (3), said tangent located upstream of said helical pump (4).

2. The ship according to Claim 1, **characterised in that** said tangent upstream of said helical pump (4) is located at an axial distance (L) from the leading edge (410) of the nozzle (4), this distance being less than D/4, D being the diameter of said rotor (42).

3. The ship according to Claim 1 or 2, **characterised in that** said hull (2) is distant from said nozzle (41) by a constant gap (G), according to a direction perpendicular to the axis (X-X') of said shaft line (3).

4. The ship according to any one of Claims 1 to 3, which comprises two parallel shaft lines (3), **characterised in that** the median longitudinal plane (P) of said hull (2) constitutes a plane of symmetry for said helical pumps (4), this plane passing through the thin plane (PM) of the ship.

5. The ship according to Claim 4, **characterised in that** the surface of said thin plane (PM) has, in a horizontal plane (HO) and/or in intermediate planes (IN) located between the vertical plane (I, I) and said horizontal plane (HO) and passing through the axis (X-X') of the shaft line, substantially opposite the helical pump (4), a concave form (C) and the curve (I) delimiting this concave form according to this horizontal (HO) and/or intermediate (IN) plane passing through the axis of rotation of the rotor (42) has two points of inflexion (PI1, PI2), one (PI1) located upstream and the other (PI2) downstream of said helical pump (4), and a tangent (T) parallel to the axis (X-X') of the shaft line (3), said tangent located upstream of said helical pump (4).

6. The ship according to any one of Claims 1 to 4, **characterised in that** the distance (H1) between the axis (X-X') of the shaft line (3) and said hull (2), measured perpendicularly to the axis (X-X') of the shaft line (3) and at said distance (L) from said leading edge (410) of the nozzle (41), is greater than the distance (H2) between the axis (X-X') of the shaft line (3) and said hull (2), measured perpendicularly to the axis (X-X') of the shaft line (3) and the trailing edge of the nozzle (41).

7. The ship according to any one of Claims 3 to 6, **characterised in that**, in a cut plane (II-II) transversal and vertical to said nozzle (31), said hull (2) is distant from said nozzle (31) by said constant gap (G) over an angular sector by at least 45°.
